# EUROPÄISCHE PATENTSCHRIFT

(11) **EP 1 633 663 B1**
(45) Veröffentlichungstag und Bekanntmachung des Hinweises auf die Patenterteilung: **21.03.2007**
(21) Anmeldenummer: 04739984.5
(22) Anmeldetag: 17.06.2004
(51) Int. Cl.: B65G 47/84, B65B 43/50

(54) **VORRICHTUNG ZUM KONTINUIERLICHEN BEFÜLLEN UND VERSCHLIESSEN EINSEITIG OFFENER KARTON/KUNSTSTOFF-VERBUNDPACKUNGEN UND ZELLENKÄFIG ZUM TRANSPORT SOLCHER PACKUNGEN IN DER VORRICHTUNG**
DEVICE FOR CONTINUOUSLY FILLING AND CLOSING COMPOSITE CARDBOARD/PLASTIC PACKAGINGS OPENED ON ONE SIDE AND CELL CAGE FOR TRANSPORTING SAID PACKAGINGS IN THE DEVICE
DISPOSITIF POUR REMPLIR ET FERMER EN CONTINU DES EMBALLAGES EN CARTON/MATIERES PLASTIQUES, OUVERTS D'UN COTE, ET ENSEMBLE CELLULE SERVANT AU TRANSPORT DE TELS EMBALLAGES DANS LEDIT DISPOSITIF

(30) Priorität: 17.06.2003 DE 10327184
(43) Veröffentlichungstag der Anmeldung: 15.03.2006
(73) Patentinhaber: SIG Technology Ltd., 8212 Neuhausen am Rheinfall (CH)
(72) Erfinder: BERGER, Jörg, 52428 Jülich (DE); BALTES, Klaus, 50127 Bergheim (DE); SEICHE, Werner, 50127 Bergheim (DE); RAFF, Rolf, 41812 Erkelenz (DE)
(74) Vertreter: Thielmann, Andreas
(86) Internationale Anmeldenummer: PCT/EP2004/006525
(87) Internationale Veröffentlichungsnummer: WO 2004/110905

(56) Entgegenhaltungen:
- EP-A- 0 727 367
- WO-A-95/02539
- WO-A-96/23655
- WO-A-96/26114
- US-A- 3 941 237
- US-A- 6 073 423

## Beschreibung

Die Erfindung betrifft eine Vorrichtung zum kontinuierlichen Befüllen und Verschließen einseitig offener Karton/Kunststoff-Verbundpackungen, insbesondere Getränkepackungen, mit wenigstens einer Füllzone zum Befüllen der offenen Packungen und einer Verschließzone zum Verschließen des offenen Packungsendes, wobei die einzelnen Zonen als umlaufende mit außen angeordneten Ausnehmungen versehene Funktionsräder, Füllrad und Verschließrad, ausgebildet sind, wobei die einzelnen Packungen in Zellenkäfigen angeordnet sind, die hintereinander an die einzelnen Räder übergeben werden, wobei die Zellenkäfige kraftschlüssig mittels Magneten in den Ausnehmungen der Räder gehalten werden, wobei zur Übergabe der Zellenkäfige zwischen den einzelnen Rädern mit außen angeordneten Ausnehmungen versehene Übergaberäder vorgesehen sind und wobei die Übergaberäder Mittel zum Verdrehen der Zellenkäfige in ihren Ausnehmungen aufweisen sowie einen Zellenkäfig zum Transport solcher Packungen in der Vorrichtung.

Vorrichtungen zum Befüllen und Verschließen einseitig offener Karton/Kunststoff-Verbundpackungen, insbesondere Getränkepackungen, sind in unterschiedlichsten Ausführungen bekannt. Hierbei werden zunächst intermittierende und kontinuierlich arbeitende Vorrichtungen unterschieden. Bei den intermittierenden Vorrichtungen erfolgt die Packungsfertigung schrittweise auf einem Dornrad, auf dessen einzelnen Stationen aus einem Packungsmantel eine einseitig offene Packung hergestellt wird. Dabei gibt der Takt des Dornrades die Geschwindigkeit der weiteren Schritte beim Füllen und Verschließen der Packungen an und begrenzt diese. Die Geschwindigkeit lässt sich auch nicht beliebig erhöhen, da durch taktweisen Transport nach dem Füllen der noch offenen Packungen ein Schwappen des Produktes nicht verhindert werden kann. Außerdem erhöht sich der mechanische Verschleiß.

Darüber hinaus sind intermittierend arbeitende Füllvorrichtungen nachteilig, weil diese in der Regel als Längsläufermaschinen ausgebildet sind, das heißt, dass die einzelnen Verfahrensschritte hintereinander entlang einer geraden Maschinenlinie erfolgen. Hier ist es zwar möglich, diese Maschinen mehrbahnig auszuführen, jedoch erhöht dies die Komplexität der Konstruktion und bedeutet eine schlechte Zugänglichkeit der auf den inneren Bahnen angeordneten Werkzeuge. Schließlich ist es bei den Längsläufern nachteilig, dass eine feste Verkoppelung der auf Transportketten geführten Packungen stets einen gesamten Stillstand der Anlage zur Folge hat, wenn auch nur an einer einzigen Stelle ein Fehler aufgetreten ist. Auch ist hier die schnellste Geschwindigkeit immer nur so groß, wie die maximale Geschwindigkeit der am langsamsten arbeitenden Einheit innerhalb der Linie.

Daher sind auch kontinuierlich arbeitende Füllvorrichtung entwickelt worden, welche gleichfalls als Längsläufermaschinen ausgeführt sind. Bei diesen werden die Packungen zwar gleichmäßig bewegt, so dass das zuvor erwähnte Schwappen ausgeschlossen werden kann, hierfür ist es jedoch notwendig, dass viele benötigte Werkzeuge und Funktionsteile mitlaufend angeordnet sein müssen. Dies erhöht den Konstruktionsaufwand, die damit zusammenhängenden Kosten und damit auch wiederum den Verschleiß.

Weitere kontinuierlich arbeitende Vorrichtungen sind zum Füllen von Glasflaschen bekannt. Die Flaschen werden dazu hintereinander in Einzelreihen transportiert, wobei die mechanische Festigkeit der Flaschen zur Übertragung der benötigten Druckkräfte ausgenutzt werden können. Dieses Verfahren lässt sich jedoch aufgrund der Labilität der offenen Karton/Kunststoff-Verbundpackungen nicht auf deren Füllvorrichtungen übertragen.

Eine Vorrichtung mit allen Merkmalen des Oberbegriffs von Anspruch 1 ist aus der WO-Al-95/02539 bekannt. Die Verwendung von Zellenkäfigen zur Aufnahme nicht starrer Behälter ist für sich bereits aus der EP-A1-0 727 367 bekannt. Auch ist es bereits vorgeschlagen worden (EP-B1-0 707 550), eine kontinuierlich arbeitende Füllvorrichtung vorzusehen, bei denen die Karton/Kunststoff-Verbundpackungen in Zellenkäfigen angeordnet sind, welche hintereinander an verschiedene Funktionsräder zum Füllen, Verschließen etc. der einzelnen Packungen übergeben werden, wobei die Funktionsräder als über ihren Umfang verteilt angeordnete Ausnehmungen aufweisende Sternräder ausgebildet sind und wobei die Zellenkäfige kraftschlüssig mittels Magneten in den Ausnehmungen der Funktionsräder gehalten werden. Die Halterung mittels Magneten hat zwar konstruktive Vorteile, jedoch müssen die Magnete so ausgelegt sein, dass ihre Anziehungskraft so ausreichend stark ist, um die Zellenkäfige sicher in ihrer Position zu halten. Dies hat jedoch den Nachteil, dass zum Lösen der Zellenkäfige von den Permanentmagneten eine relativ starke Kraft aufgewendet werden muss, und dass das Ablösen eines Zellenkäfigs beim Ausschleusvorgang plötzlich und ruckartig erfolgt. Dies ist jedoch für den Füllungsprozess nicht erwünscht, da, insbesondere nach dem Befüllen der Packungen und vor deren Verschließen ein Überschwappen des Packungsinhaltes nicht zuverlässig ausgeschlossen werden kann.

Davon ausgehend liegt der vorliegenden Erfindung die Aufgabe zugrunde, die eingangs genannte und zuvor näher beschriebene Vorrichtung zum Befüllen und Verschließen einseitig offener Karton/Kunststoff-Verbundpackungen so auszugestalten und weiterzubilden, dass die vorerwähnten Nachteile vermieden werden. Weiterhin ist erwünscht, dass eine möglichst hohe Flexibilität mit Hinblick auf die Fertigung unterschiedlicher Packungsformate und ein minimaler Konstruktions- und Wartungsaufwand erreicht wird.

Diese Aufgabe wird dadurch gelöst, dass als Mittel zum Verdrehen der Zellenkäfige in ihren Ausnehmungen für jede Ausnehmung ein drehbar gelagertes Steuerelement vorgesehen ist, welches über einen Antrieb so verdreht wird, dass sich der Zellenkäfig stoßfrei an die Magneten der Funktionsräder anlegt (Einschleusen) bzw. von ihnen ablöst (Ausschleusen).

Die Erfindung hat erkannt, dass unter Beibehaltung der kraftschlüssigen Magnethalterung dennoch ein besonders "schonendes" Ausschleusen der Packungen von einem Funktionsrad auf ein Übergaberad möglich ist, indem der gesamte Zellenkäfig mittels dem Steuerelement um seine Hochachse gedreht wird. Sind nur ein Magnet bzw. mehrere übereinander liegende Magnete vorgesehen, bewirkt die Verdrehung, dass die Ablösung nicht mehr senkrecht zur Magnetoberfläche erfolgt, sondern annähernd parallel dazu. Noch deutlicher ist der Vorteil, wie weiter unten noch näher erläutert werden wird, bei der Verwendung mehrerer über den Umfang verteilt angeordneter Magnete zu erkennen. Denn bei einer solchen Anordnung wird erreicht, dass das Abheben bzw. Aufsetzen der Magnete zeitlich nacheinander erfolgt, so dass nur eine geringere Kraft aufgewendet werden muss und darüber hinaus auch die Geräuschentwicklung vermindert wird.

Nach einer bevorzugten Lehre der Erfindung erfolgt die Befüllung der zu füllenden Packungen aseptisch, dazu ist zum Sterilisieren der Packungen vor dem Füllrad ein Sterilisierrad vorgesehen und der gesamte Transportbereich vom Sterilisierrad über das Füllrad bis einschließlich dem Verschließrad als geschlossener Sterilkanal ausgebildet, damit das Eindringen von Schmutz oder Keimen in diesem Sterilbereich zuverlässig ausgeschlossen ist.

Es ist möglich, mit der erfindungsgemäßen Vorrichtung sowohl zweiteilige Packungen, welche aus einem Behälter und einem Deckel bestehen, zu füllen als auch einteilige Faltpackungen, wie sie als Flachgiebelverbundpackungen für Getränke in vielerlei Ausgestaltung auf dem Markt erhältlich sind. Im letztgenannten Fall ist es notwendig, vor dem Füllrad bzw. im Falle eines Sterilisierrades bereits vor dem Sterilisierrad ein Vorfaltrad vorzusehen, das zum Vorfalten des noch offenen Packungsendes dient, um das spätere Verschließen zu erleichtern. Bei einer solchen Ausgestaltung ist in weiterer Ausgestaltung der Erfindung auch als letztes Rad ein Packungsformrad vorgesehen, welches dazu dient, die gerade zuvor geschlossene Packung in ihre quaderförmige Endform zu bringen und gegebenenfalls die noch abstehenden Packungsohren anzuheften.

Bei der erfindungsgemäßen Vorrichtung ist durch eine nahezu freie Wahl der Durchmesser der einzelnen Funktionsräder die Möglichkeit gegeben, die höchste Transportgeschwindigkeit und die jeweils erforderliche Behandlungsdauer in den jeweiligen Position optimal aufeinander abzustimmen. Die bewegten Werkzeuge sind dabei fest auf den sich drehenden Funktionsrädern installiert, so dass Relativbewegungen bzw. ein Zurückführen der Werkzeuge nicht notwendig sind. Die Übergaberäder können dabei im Vergleich zu den Funktionsrädern äußerst klein ausgeführt werden. Als Mittel zum Verdrehen der Zellenkäfige ist in ihren Ausnehmungen für jede Ausnehmung ein drehbar gelagertes Steuerelement vorgesehen, welches über einen Antrieb so verdreht wird, dass sich der Zellenkäfig stoßfrei an die Magneten der Funktionsräder anlegt bzw. von ihnen ablöst. Dazu weist das Steuerelement eine formschlüssig mit dem Zellenkäfig zusammenwirkende Formgebung auf, so dass die erfindungsgemäße Vorrichtung gewissermaßen eine kombinierte Kraft-/Formschlussverbindung beschreibt. Bevorzugt ist das Steuerelement an seinem in jede Steuerung des Übergaberades hineinragenden Ende gabelartig ausgebildet.

Bevorzugt ist dazu als Steuerung eine Kurvensteuerung mit einer feststehenden Steuerkulisse zur Führung eines an dem Steuerelement angeordneten Kulissensteines vorgesehen. Da die Übergaberäder nicht mit Magneten versehen sind, muss die Halterung der Zellenkäfige auf andere Art erfolgen. Gemäß einer bevorzugten Ausbildung der Erfindung ist dazu vorgesehen, dass im Bereich der Übergaberäder von diesen beabstandet angeordnete Führungsschienen zur Zwangsführung der Zellenkäfige angeordnet sind.

Nach einer weiteren Lehre der Erfindung sind alle Räder und auch die Übergaberäder in einer Ebene angeordnet, so dass die Zellenkäfige gleichfalls nur in einer Ebene umlaufen. Folglich werden die leeren Packungen von oben in die Zellenkäfige eingebracht und die vollen Packungen nach oben aus den Zellenkäfigen entnommen. Nach einer weiteren bevorzugten Ausgestaltung der Erfindung erfolgt das Ein- und Ausbringen der Packungen in die Zellenkäfige jeweils entlang einer wendelförmige Bahn, so dass dies keinen Einfluss auf die Transportgeschwindigkeit der Zellenkäfige hat. Dazu kann eine automatisierte Zubringereinrichtung zum Einsatz kommen.

Eine weitere Ausbildung der Erfindung sieht vor, dass die Anzahl der verwendeten Zellenkäfige endlich ist und der Anzahl der maximal belegbaren Aufnahmen aller Räder und Übergaberäder entspricht. Die umlaufenden Zellenkäfige entsprechen also quasi einer "Transportkette", jedoch mit dem großen Vorteil, dass die einzelnen "Kettenglieder" nicht aneinander gekoppelt sind, sondern im Bedarfsfalle leicht ausgetauscht werden können.

Ein zur Verwendung mit der erfindungsgemäßen Vorrichtung vorgesehener Zellenkäfig zeichnet sich durch einen oben offenen Zellenkörper zur Aufnahme einer zu befüllenden Packung und wenigstens einem mit dem Zellenkörper verbundenen Kragen aus, der wenigstens ein nach oben oder unten vorstehendes Mitnehmerelement aufweist, wobei das Mitnehmerelement mit der Gabel des Steuerelementes in Eingriff steht, um den Zellenkäfig innerhalb der Ausnehmung des Übergaberades um seine Hochachse verdrehen zu können. Zur besseren Führung und zur damit verbundenen Erhöhung der Transportgeschwindigkeit ist es jedoch vorteilhaft, wenn der Zellenkäfig einen oberen und einen unteren Kragen aufweist. Zum Erreichen der erfindungsgemäßen Verdrehung sind die Kragen außen rund ausgebildet.

Nach einer weiteren Ausgestaltung der Erfindung ist vorgesehen, dass jeder Kragen mindestens einen Anlagebolzen aufweist. Dieser Anlagebolzen liegt an der Außenseite der Ausnehmungen der Funktions- bzw. Übergaberäder an und besteht nach einer weiteren bevorzugten Lehre der Erfindung aus einem ferromagnetischen Material, so dass durch entsprechend an den Rädern angeordnete Magnete ein sicherer Halt zwischen der Aufnahmestation in der Ausnehmung eines Rades und dem Zellenkäfig sichergestellt ist.

In weiterer bevorzugter Ausführung der Erfindung weist jeder Zellenkörper vier Wandbleche und einen Zellenboden auf. Dabei ist bevorzugt der Zellenboden innerhalb des Zellenkörpers höhenverstellbar ausgebildet, um auch - bei gleichem Packungsquerschnitt - verschieden große Packungsformate aufnehmen zu können. Es ist klar, dass mit der erfindungsgemäßen Vorrichtung unterschiedlichste Packungsgrößen befüllt werden können. Hierzu sind jeweils alle Zellenkäfige einheitlich auf einen Packungsquerschnitt abgestimmt. Es ist von besonderem Vorteil, dass für jeden Packungsquerschnitt lediglich ein eigener Satz Zellenkäfige lagerhaltig sein muss, ohne dass Eingriffe an der Maschine vorgenommen werden müssen. Wie bereits erwähnt, erfolgt die Umstellung verschiedener Packungsgrößen innerhalb eines Packungsquerschnittes nur durch die Verstellung der Zellenböden innerhalb der Zellenkörper, ohne dass hier der gesamte Satz der Zellenkäfige ausgewechselt werden müsste.

Gemäss einer weiteren Ausgestaltung der Erfindung weist der Zellenkäfig wenigstens einen Indexstift zur Bestimmung seiner Orientierung auf. Eine solche Ausführung ist besonders dann zweckmäßig, wenn es beim Befüllen der Packung auf die Orientierung der Packung im Zellenkäfig ankommt, beispielsweise bei einseitig angeordneten Schwächungsbereichen oder einseitig aufgebrachten Ausgießelementen. Mit Hilfe des Indexstiftes ist es also leicht möglich, trotz des runden Kragens eine eindeutige Lagebestimmung der Packung in Bezug auf die Funktionsräder automatisch durchzuführen.

Die Erfindung wird nachfolgend anhand einer lediglich bevorzugte Ausführungsbeispiele darstellenden Zeichnung näher erläutert. In der Zeichnung zeigen:
- Fig. 1: eine erfindungsgemäße Vorrichtung in schematischer Draufsicht,
- Fig. 2: den Ausschnitt eines Transportrades und einen Zellenkäfig in perspektivischer Darstellung zur Erläuterung der Aufnahme eines Zellenkäfiges,
- Fig. 3: den Zellenkäfig aus Fig. 3 in detaillierter perspektivischer Darstellung,
- Fig. 4: ein Übergaberad mit einem schematisch dargestellten Zellenkäfig in perspektivischer Darstellung,
- Fig. 5: eine Draufsicht auf ein Übergaberad zum Zeitpunkt des Ausschleusens eines Zellenkäfiges aus einem Funktionsrad,
- Fig. 6: eine Draufsicht auf ein Übergaberad zum Zeitpunkt des Einschleusens eines Zellenkäfiges in ein Funktionsrad und
- Fig. 7: eine alternative Lösung zum Ausschleusen der Packungen aus den Zellenkäfigen.

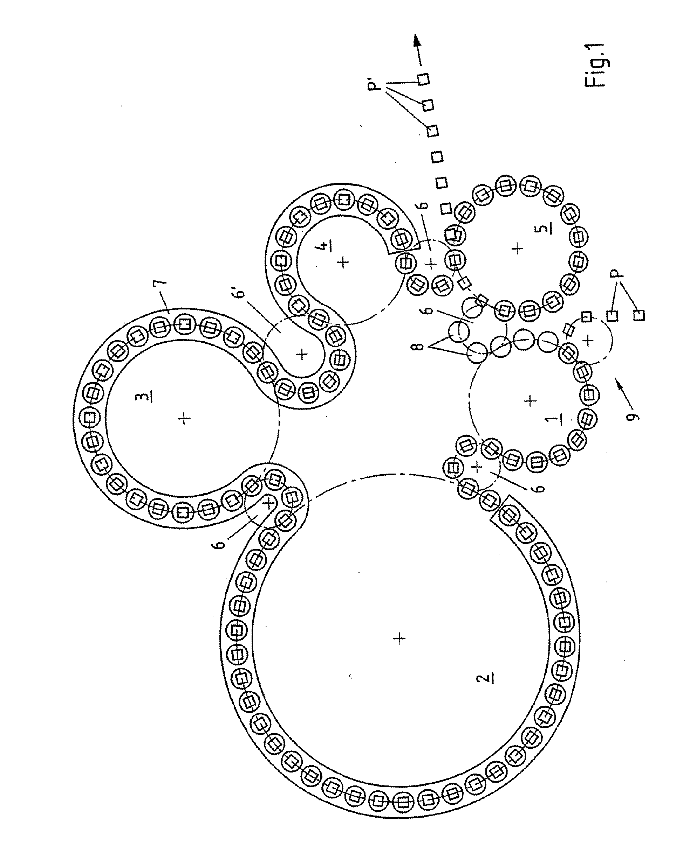

Fig. 1 zeigt in schematischer Darstellung eine Draufsicht auf eine erfindungsgemäße Vorrichtung. Man erkennt zunächst unterschiedlich große Räder, die im folgenden näher erläutert werden sollen. Je nachdem, ob die zu befüllenden Packungen bei konventioneller Abfüllung mit offenem Kopf oder im besonderen Fall mit nach oben offenem Boden, d.h. auf dem Kopf stehend, befüllt werden sollen, ist es notwendig, vor dem Füllen den später zu verschließenden Kopf- bzw. Bodenbereich vorzufalten. Dies erfolgt beim dargestellten Ausführungsbeispiel auf einem Vorfaltrad 1. Selbstverständlich müssen die Vorfaltwerkzeuge durch Schweißwerkzeuge ersetzt werden, wenn es sich bei den zu befüllenden Packungen P um solche Packungen handelt, deren Öffnung nicht durch Falten und Versiegeln, sondern durch Aufbringen eines Kunststoffdeckels oder dergleichen verschlossen wird. Hier ist es auch möglich, durch die im Deckel angeordneten Ausgießöffnungen zu sterilisieren und zu befüllen.

An das Vorfaltrad 1 schließt sich ein Sterilisierrad 2 an, das den größten Durchmesser aufweist, weil der Vorgang des Sterilisierens der zu befüllenden Packungen P länger dauert als alle anderen Vorgänge. Die dazu notwendigen Werkzeuge sind innerhalb bzw. oberhalb des Sterilisierrades angeordnet und hier nicht dargestellt. An das Sterilisierrad 2 schließt sich ein Füllrad 3 an, in dem die Packungen befüllt werden. Die befüllte Packung wird anschließend in einem Verschließrad 4 verschlossen und schließlich in einem Packungsformrad 5 auf die endgültige Form gebracht. Beispielsweise werden hier noch abstehende "Packungsohren" angelegt, so dass die Packung eine parallelepipede Gestalt annimmt.

Zwischen den einzelnen vorgenannten Rädern sind im dargestellten Ausführungsbeispiel Übergaberäder 6, 6' gezeigt, die in der gleichen Ebene wie die übrigen Räder 1 bis 5 angeordnet sind und dafür sorgen, dass ein kontinuierlicher Transport der zu füllenden Packungen P ermöglicht wird. Das Übergaberad 6' ist in Fig. 1 größer ausgebildet als die anderen Übergaberäder 6.

Man erkennt, dass der größte Teil des Umfangs des Sterilisierrades 2, das gesamte Füllrad 3 und der größte Teil des Verschließrades 4 als Sterilkanal 7 gekapselt ausgeführt sind. Auf diese Weise wird zuverlässig verhindert, dass nach dem Sterilisieren der zu befüllenden Packungen P noch Schmutz oder Keime ins Packungsinnere gelangen können.

Erfindungsgemäß erfolgt der Transport der zu befüllenden Packungen P mittels Zellenkäfigen 8, welche nachfolgend noch im einzelnen beschrieben werden. Mittels einer nicht näher dargestellten automatisierten Zubringereinrichtung 9 werden die zu befüllenden Packungen P von oben in die oben offenen Zellenkäfige 8 eingeschleust, und zwar entlang einer (nicht dargestellten) wendelförmigen Bahn im Bereich des Vorfaltrades 1. Im dargestellten und insoweit bevorzugten Ausführungsbeispiel erfolgt das Ausschleusen der fertig befüllten und verschlossenen Packungen P' im Bereich des Packungsformrades 5, wobei auch hier die Packungen P' entlang einer (ebenfalls nicht dargestellten) wendelförmigen Bahn aus der Ebene des Zellenkäfiges herausbewegt werden und so beispielsweise zur Applikation eines Ausgießers oder zur Palettierung und zur Auslieferung gelangen.

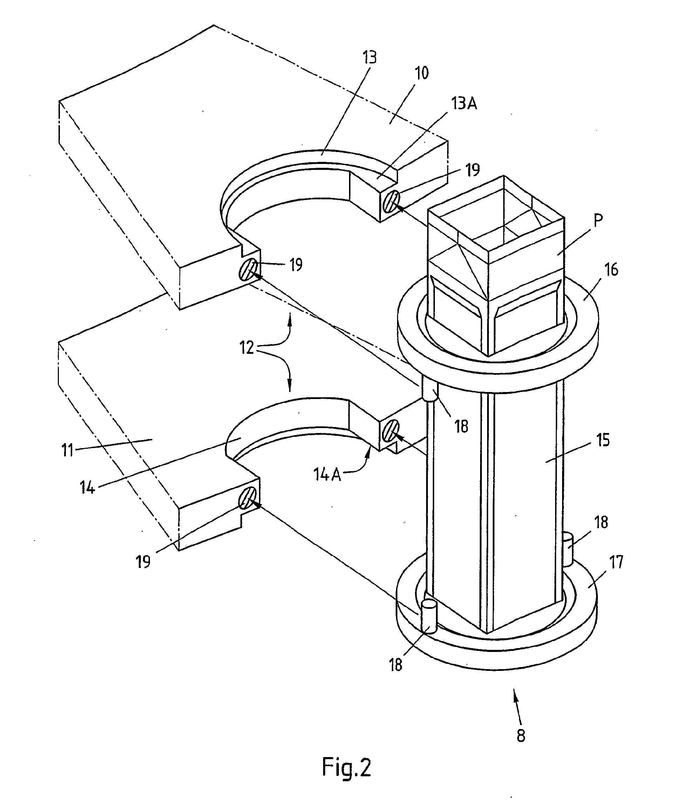

Wie aus Fig. 2 ersichtlich, sind im dargestellten und insoweit bevorzugten Ausführungsbeispiel die Transporträder mit zwei parallel beabstandeten Scheiben oder Ringen 10 und 11 versehen, welche jeweils über ihren Umfang verteilte Aufnahmen für die Zellenkäfige 8 in Form von Ausnehmungen 12 aufweisen. Man erkennt in Fig. 2 ferner, dass die Ausnehmungen 12 im oberen Ring 10 eine obere Anlagefläche 13 und im unteren Ring 11 eine entsprechende untere Anlagefläche 14 aufweisen.

Auch der schematische Aufbau eines Zellenkäfiges 8 ist in Fig. 2 dargestellt. Dieser besteht zunächst aus einem Zellenkörper 15 zur Aufnahme der oben offenen Packung. Der Zellenkörper 15 weist einen oberen Kragen 16 und einen unteren Kragen 17 auf, welche gleich groß und rund ausgeführt sind. Bevorzugt weisen beide Kragen 16, 17 jeweils zwei von diesen senkrecht nach unten bzw. nach oben abstehenden Anlagebolzen 18 auf, die dazu geeignet und bestimmt sind, die runden Zellenkäfige 8 stets tangential an die entsprechenden Räder "anzudocken". Man erkennt, wie ein Zellenkäfig 8 von den Ausnehmungen 12 in den Ringen 10 und 11 aufgenommen werden kann. Zum besseren Verständnis ist hier jedoch der Zellenkäfig 8 nicht in seiner Betriebsposition, sondern etwas beabstandet dazu angeordnet. Im Endbereich der Anlageflächen 13 bzw. 14 angeordnete Magnete 19 sind so positioniert, dass sie mit den Anlagebolzen 18 korrespondieren, welche dazu zweckmäßigerweise aus ferromagnetischem Material hergestellt sind. Es hat sich gezeigt, dass diese einfache Form der kraftschlüssigen Verbindung vom jeweiligen Rad und Zellenkäfig 8 ausreicht, um die Zellenkäfige 8 sicher in den Ausnehmungen 12 der Räder festzuhalten. Dabei sichern die Auflageflächen 13A und 14A die Höhenlage der Zellenkäfige 8 durch die Kragen 16 und 17.

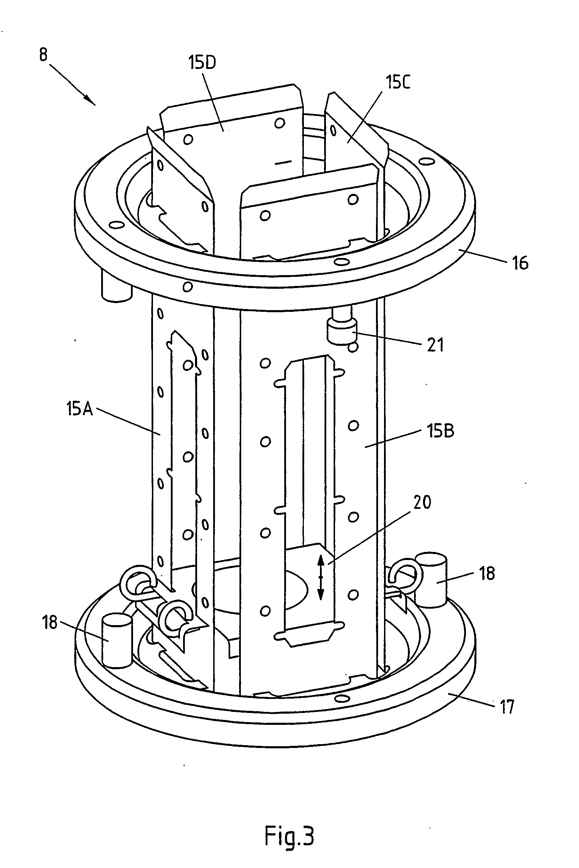

In Fig. 3 ist der Zellenkäfig 8 in einem möglichen Ausführungsbeispiel etwas detaillierter dargestellt. Man erkennt, dass der Zellenkörper 15 zunächst aus vier Wandblechen 15A, 15B, 15C, 15D besteht, welche in ihrem oberen Bereich leicht nach außen angewinkelt sind, um das automatisierte Einbringen der aufzunehmenden Packungen P zu erleichtern. Um mit ein und demselben Zellenkäfig 8 unterschiedlich große Packungen P füllen zu können, ist der untere Teil des Zellenkörpers 15 als höhenverstellbar angeordneter Zellenboden 20 ausgelegt, welcher entlang des nicht näher bezeichneten Doppelpfeiles in verschiedenen, den unterschiedlichen Packungsformaten entsprechenden, Höhen fixiert werden kann. Schließlich weist im dargestellten Ausführungsbeispiel der obere Kragen 16 einen im dargestellten Fall nach unten ragenden Mitnahmestift 21 auf, dessen Funktion weiter unten näher beschrieben wird. Bei dem Mitnahmestift 21 kann es sich gleichzeitig um einen Indexstift handeln, der es ermöglicht, eine einmal angenommene Lage der Packung P im Zellenkäfig 8 während des gesamten Durchlaufs durch die Füllmaschine beizubehalten. Dies ist notwendig, weil der runde Zellenkäfig 8 mit seinen Anlagebolzen 18 sonst in zwei um eine senkrechte Achse um 180° verschiedenen Positionen entlang der Vorrichtung umlaufen könnte. Die Verwendung dieses Indexstiftes ist immer dann notwendig, wenn die Art der zu befüllenden Packung eine eindeutige Lagezuordnung erfordert, wie dies zum Beispiel bei solchen Packungen der Fall ist, die ein auf einer Seite angeordnetes Ausgießelement oder eine einseitig angeordnete Schwächungszone aufweisen, auf die ein Ausgießelement aufgebracht werden muss.

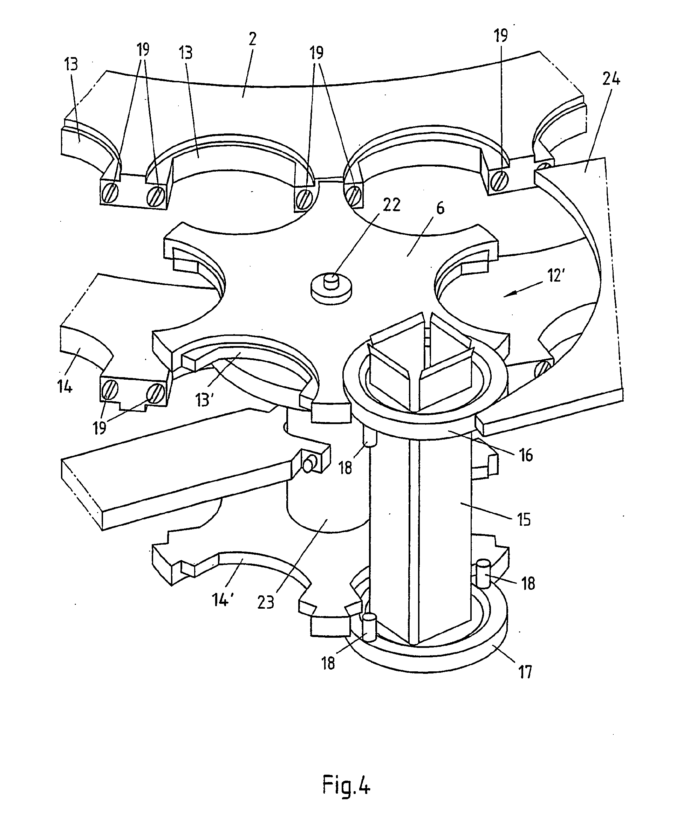

Schließlich ist in Fig. 4 dargestellt, wie die Übergabe des Zellenkäfiges 8 von einem Transportrad zum anderen erfolgt. Das bereits erwähnte Übergaberad 6 weist gleichfalls ein oberes und unteres Radelement auf, welche mittels einer Achse 22 drehfest miteinander verbunden sind. Dieses Übergaberad 6 ist nicht angetrieben, die Achse 22 wird von einem fest mit der Vorrichtung verbundenen Lager 23 aufgenommen. Auch das Übergaberad 6 weist eine obere Anlagefläche 13' und eine untere Anlagefläche 14' auf, welche jedoch nicht mit Magneten in ihren Endbereichen versehen sind. Eine Führungsschiene 24 hält den Zellenkäfig 8 in der entsprechenden Ausnehmung des Übergaberades 6, welches im dargestellten Ausführungsbeispiel sechs Ausnehmungen aufweist. Nach dem Umschwenken in die Kreisbahn des nächsten Transportrades, hier beispielsweise des Sterilisierrades 2, verlassen die Zellenkäfige 8 das Übergaberad 6 und werden in die entsprechenden Ausnehmungen 12 des Sterilisierrades 2 hineinbewegt, bis schließlich hier wieder die kraftschlüssige Verbindung zwischen den Anlagebolzen 18 und den Magneten 19 wirksam wird.

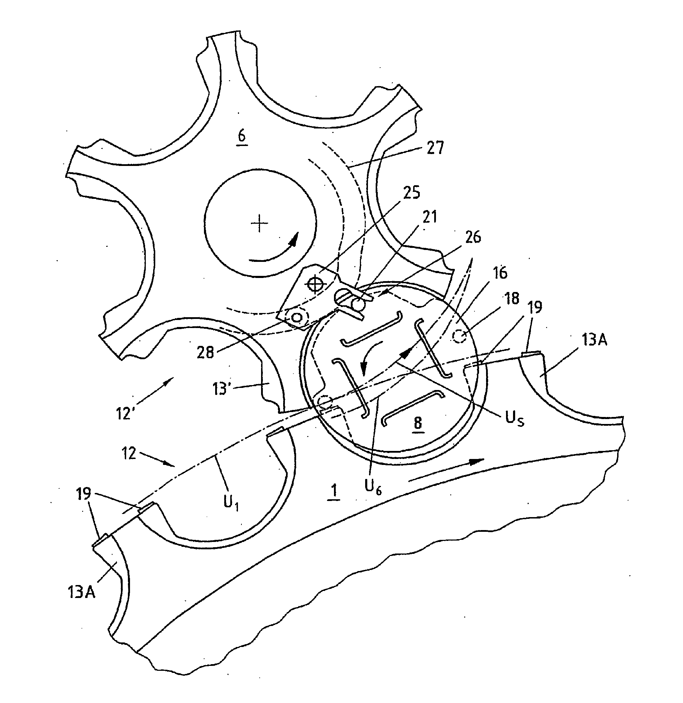

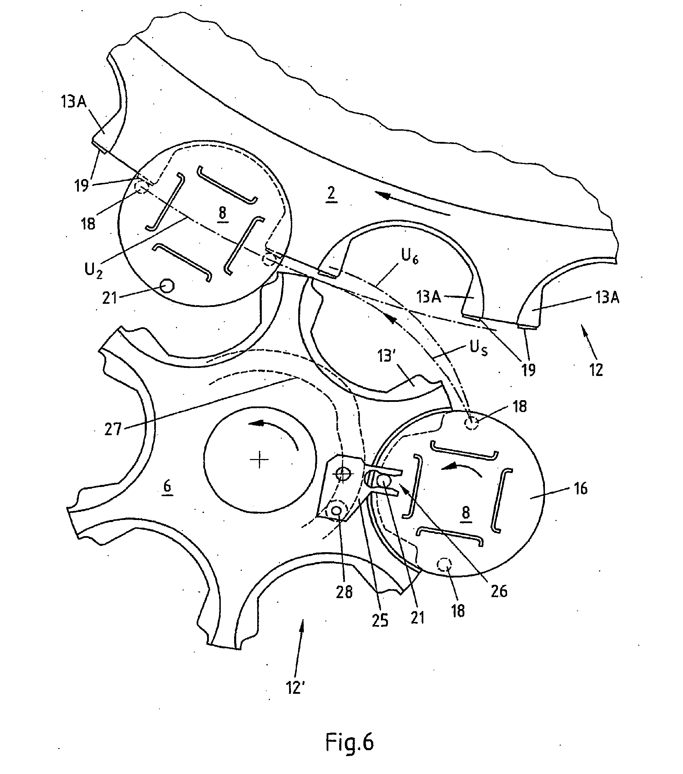

Zur Verdeutlichung der Funktionsweise wurde auf die Darstellung der Verdrehmittel für die Zellenkäfige in Fig. 4 komplett verzichtet. Eine Beschreibung der Funktion der erfindungsgemäßen Konstruktion erfolgt anhand der Fig. 5 und 6, wobei das Ausschleusen und Einschleusen zur besseren Übersicht in getrennten Zeichnungen dargestellt worden sind.

Fig. 5 zeigt eine "Momentaufnahme" des Ausschleusens eines Zellenkäfigs 8 aus einem Funktionsrad, hier dem Vorfaltrad 1 mittels des Übergaberades 6. Man erkennt, dass der in Fig. 5 rechte Anlagebolzen 18 sich bereits vom Magneten 19 gelöst hat. In dieser Stellung hat sich der Anlagebolzen 18 jedoch bereits von der um den Mittelpunkt des Übergaberades geführten Umlaufbahn U₆ entfernt, und zwar mit Hilfe einer Verdrehung des Zellenkäfigs 8 im Inneren der Ausnehmung 12', bedingt durch den Eingriff der Mitnehmergabel 26 des Steuerelementes 25 um den Mitnahmestift 21. Die Verdrehung des Steuerelements 25 erfolgt im dargestellten und insoweit bevorzugten Ausführungsbeispiel mittels einer Kurvensteuerung, wobei unterhalb des oberen Randes des Übergaberades 6 eine Steuerkulisse 27 fest angeordnet ist, durch die ein mit dem Steuerelement 25 verbundener Kulissenstein 28 bewegt wird. Die Geometrie der Steuerkulisse 27 ist dabei auf die beiden "Problemzonen" des Ausschleusens und Einschleusens optimiert. Es ist klar, dass die Steuerkulisse 27 umläuft, auch wenn aus Gründen der besseren Übersicht nur ein Teil von ihr dargestellt ist. Mit U₁ ist die Umlaufbahn der Haltebolzen 18 um das Vorfaltrad 1 beschrieben. Es wird deutlich, dass durch die erfindungsgemäße Verdrehung des Zellenkäfiges 8 die Übergabe von der Umlaufbahn U₁ auf die Umlaufbahn U₆ nicht ruckartig erfolgt, sondern entlang einer gesteuerten Umlaufkurve U_{S}. Auf die Darstellung der Führungsschiene 24 zur äußeren Zwangsführung der Zellenkäfige 8 im Bereich des Übergaberades 6 wurde ebenfalls aus Gründen der besseren Übersicht verzichtet.

Fig. 6 zeigt nun die Situation beim Einschleusen eines Zellenkäfigs 8 auf ein Funktionsrad, hier das Sterilisierrad 2. Bedingt durch die Steuerkulisse 27 verdreht das Steuerelement 25 den Zellenkäfig 8 vor Erreichen des Sterilisierrades 2 nach hinten, so dass der vorlaufende Haltebolzen 18 nicht weiter auf der Umlaufbahn U₆, sondern auf einer gesteuerten Kurve U_{S} verläuft und sich auf diese Weise definiert der Umlaufbahn U₂ des Sterilisierrades 2 tangential annähert. Es ist schnell ersichtlich, dass durch die erfindungsgemäße Steuerung ein "schonendes" Ausschleusen und Einschleusen der Zellenkäfige 8 im Bereich der Übergaberäder 6 erfolgt. Dies ist besonders wichtig im Bereich der Übergabe zwischen Füllrad 3 und Verschließrad 4, wo die gefüllten Packungen P leicht zum Überschwappen ihres Inhaltes neigen. Dadurch, dass die beiden seitlich der Ausnehmungen 12 angeordneten Magnete 19 nicht gleichzeitig den Kontakt mit den Haltebolzen 18 verlieren bzw. erhalten, werden die Abziehkräfte deutlich verringert. Ein weiterer Vorteil der erfindungsgemäßen Ausgestaltung liegt in der Geräuschemission, welche gleichfalls erheblich vermindert werden konnte.

Es versteht sich von selbst, dass die dargestellte Ausführungsform nur ein Beispiel darstellt, und dass neben den genannten Funktionsrädern auch noch weitere Räder vorhanden sein können, beispielsweise mit Werkzeugen zum Aufbringen eines Ausgießelementes. Ebenfalls beispielhaft sind hier die Zellenkäfige 8 zur Aufnahme von Packungen P mit einem rechteckigen Querschnitt dargestellt. Selbstverständlich ist es auch möglich, die Zellenkäfige auf beliebige Sonderformen abzustimmen .

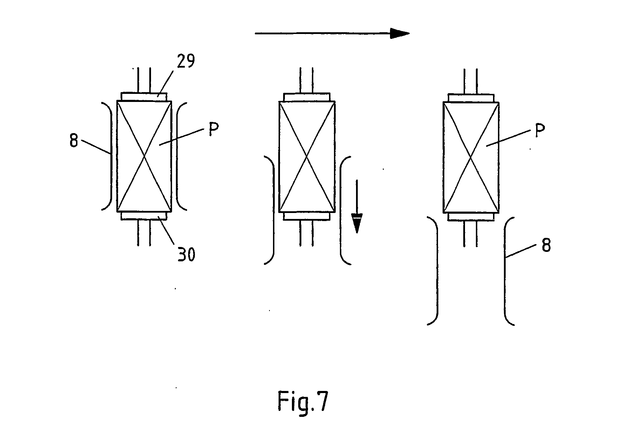

Schließlich ist in Fig. 7 eine alternative Ausführungsform der erfindungsgemäßen Vorrichtung hinsichtlich der konstruktiven Lösung des Ausschleusens der Packungen P aus den Zellenkäfigen 8 schematisch dargestellt. Da die zu transportierenden Packungen P relativ empfindlich sind, sieht diese Lösung vor, dass die fertig gefüllten Packungen P von oben und unten von entsprechenden Halteelementen 29, 30 eingespannt werden und ihren horizontalen Transportweg beibehalten, während die Zellenkäfige 8 auf einem entsprechenden (nicht dargestellten) Ausschleuserad vertikal nach unten wegbewegt werden, bis die Packungen P frei liegen und an das nachgeschaltete Aggregat, beispielsweise eine Palettierstation, weitergegeben werden können.

## Patentansprüche

1. Vorrichtung zum kontinuierlichen Befüllen und Verschließen einseitig offener Karton/Kunststoff-Verbundpackungen, insbesondere Getränkepackungen, mit einer Füllzone zum Befüllen der offenen Packungen (P) und einer Verschließzone zum Verschließen des offenen Packungsendes, wobei die einzelnen Zonen als umlaufende mit außen angeordneten Ausnehmungen (12) versehene Funktionsräder, Füllrad (3) und Verschließrad (4), ausgebildet sind, wobei die einzelnen Packungen (P) in Zellenkäfigen (8) angeordnet sind, die hintereinander an die einzelnen Räder (3, 4) übergeben werden, wobei die Zellenkäfige (8) kraftschlüssig mittels Magneten (19) in den Ausnehmungen (12) der Räder (3, 4) gehalten werden, wobei zur Übergabe der Zellenkäfige (8) zwischen den einzelnen Rädern (3, 4) mit außen angeordneten Ausnehmungen (12') versehene Übergaberäder (6, 6') vorgesehen sind und wobei die Übergaberäder (6, 6') Mittel zum Verdrehen der Zellenkäfige (8) in ihren Ausnehmungen (12') aufweisen,
**dadurch gekennzeichnet, dass** als Mittel zum Verdrehen der Zellenkäfige in ihren Ausnehmungen (12') für jede Ausnehmung (12') ein drehbar gelagertes Steuerelement (25) vorgesehen ist, welches über einen Antrieb so verdreht wird, dass sich der Zellenkäfig (8) stoßfrei an die Magneten (19) der Funktionsräder (1, 2, 3, 4, 5) anlegt (Einschleusen) bzw. von ihnen ablöst (Ausschleusen).

2. Vorrichtung nach Anspruch 1,
**dadurch gekennzeichnet, dass** die Befüllung aseptisch erfolgt, dass zum Sterilisieren der Packungen (P) vor dem Füllrad (3) ein Sterilisierrad (2) vorgesehen ist und dass der gesamte Transportbereich vom Sterilisierrad (2) über das Füllrad (3) bis einschließlich dem Verschließrad (4) als geschlossener Sterilkanal (7) ausgebildet ist.

3. Vorrichtung nach Anspruch 2,
**dadurch gekennzeichnet, dass** vor dem Sterilisierrad (2) ein Vorfaltrad (1) zum Vorfalten des noch offenen Packungsendes vorgesehen ist.

4. Vorrichtung nach einem der Ansprüche 1 bis 3,
**dadurch gekennzeichnet, dass** nach dem Verschließrad (4) ein Packungsformrad (5) zur Formung einer quaderförmigen Packung und zum Anlegen der Packungsohren vorgesehen ist.

5. Vorrichtung nach einem der Ansprüche 1 bis 4,
**dadurch gekennzeichnet, dass** das Steuerelement (25) eine formschlüssig mit dem Zellenkäfig (8) zusammenwirkende Formgebung aufweist.

6. Vorrichtung nach einem der Ansprüche 1 bis 5,
**dadurch gekennzeichnet, dass** als Steuerung eine Kurvensteuerung mit einer feststehenden Steuerkulisse (27) zur Führung eines an das Steuerelement (25) angeordneten Kulissensteines (28) vorgesehen ist.

7. Vorrichtung nach einem der Ansprüche 1 bis 6,
**dadurch gekennzeichnet, dass** im Bereich der Übergaberäder (6, 6') von diesen beabstandet angeordnete Führungsschienen (24) zur Zwangsführung der Zellenkäfige (8) angeordnet sind.

8. Vorrichtung nach einem der Ansprüche 1 bis 7,
**dadurch gekennzeichnet, dass** alle Räder (1, 2, 3, 4, 5) und auch die Übergaberäder (6, 6') in einer Ebene angeordnet sind und dass die leeren Packungen (P) von oben in die Zellenkäfige (8) eingebracht und die gefüllten und verschlossenen Packungen (P') nach oben aus den Zellenkäfigen (8) entnommen werden.

9. Vorrichtung nach Anspruch 8,
**dadurch gekennzeichnet, dass** das Ein- und Ausbringen der Packungen (P) in die Zellenkäfige (8) entlang einer wendelförmigen Bahn erfolgt.

10. Vorrichtung nach einem der Ansprüche 1 bis 9,
**dadurch gekennzeichnet, dass** die Anzahl der verwendeten Zellenkäfige (8) endlich ist und der Anzahl der maximal belegbaren Aufnahmestationen aller Räder (1, 2, 3, 4, 5) und Übergaberäder (6, 6') entspricht.

11. Zellenkäfig zum Transport von einseitig offenen Karton/Kunststoff-Verbundpackungen, insbesondere Getränkepackungen, zur Verwendung mit der Vorrichtung nach einem der Ansprüche 1 bis 10,
**gekennzeichnet durch**
einen oben offenen Zellenkörper (15) zur Aufnahme einer zu befüllenden Packung (P) und wenigstens einem mit dem Zellenkörper (15) verbundenen Kragen (16, 17), der wenigstens ein nach oben oder unten vorstehendes Mitnehmerelement (21) aufweist.

12. Zellenkäfig nach Anspruch 11,
**dadurch gekennzeichnet, dass** der Zellenkäfig (8) einen oberen Kragen (16) und einen unteren Kragen (17) aufweist.

13. Zellenkäfig nach Anspruch 11 oder 12,
**dadurch gekennzeichnet, dass** jeder Kragen (16, 17) mindestens einen Anlagebolzen (18) aufweist.

14. Zellenkäfig nach Anspruch 13,
**dadurch gekennzeichnet, dass** jeder Anlagebolzen (18) aus einem ferromagnetischen Material besteht.

15. Zellenkäfig nach Anspruch 11 oder 12,
**dadurch gekennzeichnet, dass** jeder Zellenkörper (15) vier Wandbleche (15A, 15B, 15C, 15D) und einen Zellenboden (20) aufweist.

16. Zellenkäfig nach Anspruch 15,
**dadurch gekennzeichnet, dass** der Zellenboden (20) innerhalb des Zellenkörpers (15) höhenverstellbar ausgebildet ist.

17. Zellenkäfig nach einem der Ansprüche 11 bis 16,
**dadurch gekennzeichnet, dass** das Mitnehmerelement (21) gleichzeitig als Indexstift zur Bestimmung der Orientierung des Zellenkäfiges (8) dient.

## Claims

1. A device for the continuous filling and closing of cardboard/plastic composite packages which are open on one side, in particular beverage packages, with a filling zone for filling the open packages (P), and a closing zone for closing the open package end, wherein the individual zones are rotating functional wheels with recesses (12) arranged on the outside, including a filling wheel (3) and a closing wheel (4), wherein the individual packages (P) are arranged in cell cages (8) which are successively transferred to the individual wheels (3, 4), wherein the cell cages (8) between the individual wheels (3, 4) are held in the recesses (12) of the wheels (3, 4) in a non-positive manner by means of magnets (19), wherein for transferring the cell cages (8), transfer wheels (6, 6') with recesses (12') arranged on the outside are provided and in that the transfer wheels (6, 6') comprise means for rotating the cell cages (8) in their recesses (12'),
**characterised in that**
as a means for rotating the cell cages in their recesses (12'), for each recess (12') a rotatably held control element (25) is provided which by way of a drive is rotated such that the cell cage (8) adjoins the magnets (19) of the functional wheels (1, 2, 3, 4, 5) (inward transfer) or is detached from them (outward transfer) without any jerking or jolting.

2. The device according to claim 1,
**characterised in that**
filling takes place in an aseptic way; **in that** for the purpose of sterilising the packages (P), a sterilising wheel (2) is provided upstream of the filling wheel (3), and **in that** the entire transport zone from the sterilising wheel (2) to the filling wheel (3) to and including the closing wheel (4) is a closed sterile channel (7).

3. The device according to claim 2,
**characterised in that**
upstream of the sterilising wheel (2), a prefolding wheel (1) for prefolding the still open end of the package is provided.

4. The device according to any one of claims 1 to 3,
**characterised in that**
downstream of the closing wheel (4), a package form wheel (5) to form a cuboid package and to fold back the still protruding ears of the package is provided.

5. The device according to any one of claims 1 to 4,
**characterised in that**
the control element (25) comprises a form which interacts in a positive-locking manner with the cell cage (8) .

6. The device according to any one of claims 1 to 5,
**characterised in that**
the control system is a cam control with a fixed control slide (27) for guiding a sliding block (28) arranged on the control element (25).

7. The device according to any one of claims 1 to 6,
**characterised in that**
guide rails (24) for constrained guidance of the cell cages (8) are arranged in the region of the transfer wheels (6, 6'), at a distance from these transfer wheels (6, 6').

8. The device according to any one of claims 1 to 7,
**characterised in that**
all wheels (1, 2, 3, 4, 5) including the transfer wheels (6, 6') are arranged in one plane, and **in that** the empty packages (P) are fed from above into the cell cages (8), and the full and closed packages (P') are removed upward from the cell cages (8).

9. The device according to claim 8,
**characterised in that**
inserting and removing the packages (P) into/from the cell cages (8) takes place along a helical path.

10. The device according to any one of claims 1 to 9,
**characterised in that**
the number of cell cages (8) used is finite, and corresponds to the number of the maximum occupiable accommodation stations of all wheels (1 , 2, 3, 4, 5) and transfer wheels (6, 6').

11. A cell cage for the transport of cardboard/plastic composite packages open on one side, in particular beverage packages, for use with the device according to any one of claims 1 to 10,
**characterised by**
an open-top cell body (15) for accommodating a package (P) to be filled, and at least one collar (16, 17), connected to the cell body (15) , which collar comprises at least one upward or downward protruding driver element (21).

12. The cell cage according to claim 11,
**characterised in that**
the cell cage (8) comprises an upper collar (16) and a lower collar (17).

13. The cell cage according to claim 11 or 12,
**characterised in that**
each collar (16, 17) comprises at least one bearing pin (18) .

14. The cell cage according to claim 13,
**characterised in that**
each bearing pin (18) is made from a ferromagnetic material.

15. The cell cage according to claim 11 or 12,
**characterised in that**
each cell body (15) comprises four wall plates (15A, 15B, 15C, 15D) and a cell floor (20).

16. The cell cage according to claim 15,
**characterised in that**
the cell floor (20) is designed so as to be height-adjustable within the cell body (15).

17. The cell cage according to any one of claims 11 to 16,
**characterised in that**
the driver element (21) at the same time serves as an index pin to determine the orientation of the cell cage (8).

## Revendications

1. Dispositif pour remplir et fermer en continu des emballages composites en carton/matière plastique ouverts d'un côté, en particulier des emballages pour boissons, comportant une zone de remplissage pour remplir les emballages (P) ouverts et une zone de fermeture pour fermer l'extrémité ouverte de l'emballage, les différentes zones étant réalisées sous la forme de roues fonctionnelles en circulation, roue de remplissage (3) et roue de fermeture (4), pourvues d'évidements (12) disposés à l'extérieur, les différents emballages (P) étant disposés dans des cages cellules (8) qui sont transférées les unes après les autres aux différentes roues (3, 4), les cages cellules (8) étant maintenues à force au moyen d'aimants (19) dans les évidements (12) des roues (3, 4), des roues de transfert (6, 6') pourvues d'évidements (12') disposés à l'extérieur étant prévues pour le transfert des cages cellules (8) entre les différentes roues (3, 4), et les roues de transfert (6, 6') comportant des moyens pour la rotation des cages cellules (8) dans leurs évidements (12'),
**caractérisé en ce qu'**il est prévu comme moyen pour la rotation des cages cellules dans leurs évidements (12'), un élément de commande (25) monté tournant pour chaque évidement (12'), lequel élément de commande est mis en rotation, par un dispositif d'entraînement, de manière que la cage cellule (8) s'applique (introduction) sans à-coups contre les aimants (19) des roues fonctionnelles (1, 2, 3, 4, 5), ou se détache de ceux-ci (extraction).

2. Dispositif selon la revendication 1,
**caractérisé en ce que** le remplissage s'effectue de manière aseptique, **en ce que** pour stériliser les emballages (P) il est prévu en amont de la roue de remplissage (3) une roue de stérilisation (2) et **en ce que** la totalité de la zone de transport, depuis la roue de stérilisation (2), jusqu'à y compris la roue de fermeture (4) en passant par la roue de remplissage (3), est réalisée sous la forme d'un canal stérile (7) fermé.

3. Dispositif selon la revendication 2,
**caractérisé en ce qu'**en amont de la roue de stérilisation (2) est prévue une roue de prépliage (1) pour préplier l'extrémité encore ouverte de l' emballage .

4. Dispositif selon l'une des revendications 1 à 3,
**caractérisé en ce qu'**en aval de la roue de fermeture (4) est prévue une roue de formage d'emballage (5) pour former un emballage parallélépipédique et pour appliquer les oreillettes d'emballage.

5. Dispositif selon l'une des revendications 1 à 4,
**caractérisé en ce que** l'élément de commande (25) présente une forme coopérant par complémentarité de formes avec la cage cellule (8).

6. Dispositif selon l'une des revendications 1 à 5,
**caractérisé en ce qu'**il est prévu comme commande une commande à cames avec une coulisse de commande (27) fixe pour guider un coulisseau (28) disposé sur l'élément de commande (25).

7. Dispositif selon l'une des revendications 1 à 6,
**caractérisé en ce que** dans la zone des roues de transfert (6, 6') sont disposés des rails de guidage (24), espacés de celles-ci, pour le guidage forcé des cages cellules (8) .

8. Dispositif selon l'une des revendications 1 à 7,
**caractérisé en ce que** toutes les roues (1, 2, 3, 4, 5) ainsi que les roues de transfert (6, 6') sont disposées dans un plan, et **en ce que** les emballages (P) vides sont introduits depuis le haut dans les cages cellules (8) et les emballages (P') remplis et fermés sont prélevés vers le haut des cages cellules (8).

9. Dispositif selon la revendication 8,
**caractérisé en ce que** l'introduction et l'extraction des emballages (P) dans et des cages cellules (8) s'effectue le long d'une voie en hélice.

10. Dispositif selon l'une des revendications 1 à 9,
**caractérisé en ce que** le nombre de cages cellules (8) utilisées est fini et le nombre de postes de réception pouvant être occupés au maximum correspond à toutes les roues (1, 2, 3, 4, 5) et aux roues de transfert (6, 6').

11. Cage cellule pour le transport d'emballages composites en carton/matière plastique ouverts d'un côté, en particulier d'emballages pour boissons, destinée à être utilisée avec le dispositif selon l'une des revendications 1 à 10,
**caractérisée par** un corps de cellule (15) ouvert à sa partie supérieure pour recevoir un emballage (P) à remplir et au moins une collerette (16, 17) reliée au corps de cellule (15), qui comporte au moins un élément entraîneur (21) faisant saillie vers le haut ou vers le bas.

12. Cage cellule selon la revendication 11,
**caractérisée en ce que** la cage cellule (8) comporte une collerette supérieure (16) et une collerette inférieure (17).

13. Cage cellule selon la revendication 11 ou 12,
**caractérisée en ce que** chaque collerette (16, 17) comporte au moins un doigt de contact (18).

14. Cage cellule selon la revendication 13,
**caractérisée en ce que** chaque doigt de contact (18) est constitué d' un matériau ferromagnétique.

15. Cage cellule selon la revendication 11 ou 12,
**caractérisée en ce que** chaque corps de cellule (15) comporte quatre tôles de paroi (15A, 15B, 15C, 15D) et un fond de cellule (20).

16. Cage cellule selon la revendication 15,
**caractérisée en ce que** le fond de cellule (20) est réalisé réglable en hauteur à l'intérieur du corps de cellule (15) .

17. Cage cellule selon l'une des revendications 11 à 16,
**caractérisée en ce que** l'élément entraîneur (21) sert en même temps de doigt d'indexation pour déterminer l'orientation de la cage cellule (8) .
